# EUROPEAN PATENT SPECIFICATION

(11) **EP 3 108 729 B1**
(45) Date of publication and mention of the grant of the patent: **01.05.2019**
(21) Application number: 16175722.4
(22) Date of filing: 22.06.2016
(51) Int. Cl.: A01B 59/043, B60D 1/14, B60D 1/00

(54) **DOUBLE IMPLEMENT CONNECTION AT THE REAR OF A VEHICLE**
DOPPELTER HECKANBAUGERÄTEANSCHLUSS EINES FAHRZEUGS
CONNEXION D'INSTRUMENT ARRIÈRE DOUBLE DE VÉHICULE

(30) Priority: 25.06.2015 IT UB20151630
(43) Date of publication of application: 28.12.2016
(73) Proprietor: CNH Industrial Italia S.p.A., 10135 Torino (IT)
(72) Inventor: HUBER, Roland, 4391 Waldhausen (AT); KOECK, Reinhard, 4360 Grein (AT)
(74) Representative: CNH Industrial IP Department

(56) References cited:
- WO-A2-2010/117290
- DE-A1-102014 213 896
- FR-A1- 2 034 251

## Description

### BACKGROUND OF THE INVENTION

### 1. Field of the Invention

The present invention relates to agricultural tractors, and, more particularly, to the attachment of agricultural implements thereto.

### 2. Description of the Related Art

Agricultural tractors are used to pull various agricultural implements that are necessary for tilling, seedbed preparation, planting, mowing, raking, harvesting, baling, spraying, and fertilizing. Often multiple such agricultural implements may be pulled by the agricultural tractor at one time, such as tillage implements and sprayers. Some such agricultural implements are adapted to be drawn in tandem, such that the rear agricultural implement attaches to the front agricultural implement. However, not all agricultural implements are advantageously adapted to be used to tow a further agricultural implement, either as a consequence of their function or by nature of their design. For example, and not by way of limitation, an agricultural implement may be adapted to be attached to the three point hitch of an agricultural tractor, so that it can be raised and lowered to engage the ground, and as a consequence of its function or design, lack a sturdy rear mounting surface suitable as a further hitch mounting point. In this circumstance, a second agricultural implement designed to be pulled behind such an arrangement may have a gooseneck, or a long extension that reaches over the foremost agricultural implement to the rear of the agricultural tractor, where it may attach to a trailer coupling.

Three point hitches are useful to both draw and lift an agricultural implement. However, by their nature, they interfere with the usefulness of a conventional trailer coupling, which is usually mounted between the lift arms of the three point hitch and beneath the top link. In order to use the conventional trailer coupling when no three point hitch mounted agricultural implement is in use, the top link is often clipped up against the back of the agricultural tractor and out of the way. When the three point hitch is in use, however, clipping the top link out of the way of the trailer coupling is not possible. In order to employ the arrangement of agricultural implements described above, wherein the first agricultural implement is attached to the three point hitch and the second agricultural implement is attached to the trailer coupling, the prior art has employed various methods to make the trailer coupling accessible.

One possible method is shown in German disclosure document DE 10 2014 213 896 A1 (Scharmueller). In this method, the trailer coupling is simply moved above the top link. A substantial bracket provides both the trailer coupling mounting surface and a replacement top link attachment point, as the original top link attachment point is both obscured by the bracket and utilized for reinforcement using a short fixed link. However, this method has several significant drawbacks. First, the bracket is necessarily very large and cumbersome, which would require an operator to expend considerable effort installing and removing it, or to leave it in place. Second, it interferes with the agricultural tractor's original three point hitch geometry, as a consequence of the shorter top link. Third, the relocation of the trailer coupling to a point above the top link results in very high forces and bending moments being introduced into the tractor chassis and bracket mounting points. Fourth, and perhaps most significantly, relocation of the trailer coupling to a point above the top link results in the potential for tractor instability, which might result in tractor rollover or loss of ground contact at the front wheels.

What is needed in the art is a way to allow the use of both the three point hitch and the trailer coupling of an agricultural tractor when using a first agricultural implement adapted to be used with the three point hitch but lacking its own rear hitch mounting point, and when using a second agricultural implement having a gooseneck that reaches over the first agricultural implement to attach to the trailer coupling of the agricultural tractor, without raising the trailer coupling to a point above the top link of the three point hitch.

### SUMMARY OF THE INVENTION

The present invention provides such a way to allow the use of both the three point hitch and the trailer coupling of an agricultural tractor when using a first agricultural implement adapted to be used with the three point hitch but lacking its own rear hitch mounting point, and when using a second agricultural implement having a gooseneck that reaches over the first agricultural implement to attach to the trailer coupling of the agricultural tractor, without raising the trailer coupling to a point above the top link of the three point hitch.

The invention in one form is directed to an agricultural tractor having a chassis, a three point hitch for attaching a first agricultural implement, and a trailer coupling for attaching a second agricultural implement having a gooseneck. The three point hitch has two lift arms for raising and lowering the first agricultural implement, and a top link. The top link has an opening that accommodates the passage therethrough of the gooseneck of the second agricultural implement as it attaches to the trailer coupling.

The invention in another form is directed to a method of attaching two agricultural implements to an agricultural tractor. The method includes providing an agricultural tractor having a three point hitch and a trailer coupling, attaching a first agricultural implement to the three point hitch, and attaching a second agricultural implement to the trailer coupling. The second agricultural implement has a gooseneck for reaching over the first agricultural implement to the trailer coupling. The method further includes providing the three point hitch with two lift arms for raising and lowering the first agricultural implement attached to the three point hitch, and providing the three point hitch with a top link having a top link opening for accommodating the passage therethrough of the gooseneck of the second agricultural implement.

An advantage of the present invention is that it allows such use of both the three point hitch and of the trailer coupling without requiring the use of an additional large and cumbersome bracket that locates the trailer coupling above the top link of the three point hitch.

Another advantage is that the present invention maintains the agricultural tractor's original three point hitch geometry.

A further advantage of the present invention is that it does not result in the generation of additional forces and bending moments into the tractor chassis and bracket mounting points as a consequence of the relocation of the trailer coupling above the top link of the three point hitch.

Another advantage of the present invention is that it allows the rearmost agricultural implement to be connected to the agricultural tractor at a lower point, thereby minimizing the potential for tractor instability.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a side view of an agricultural tractor;
Fig. 2 is a side view of an agricultural tractor with a first agricultural implement attached to its three point hitch and a second agricultural implement with a gooseneck attached to its trailer coupling;
Fig. 3 is a rear view of an agricultural tractor showing a three point hitch and a conventional trailer coupling;
Fig. 4 is a rear isometric view of a three point hitch and trailer coupling according to one embodiment of the invention;
Fig. 5 is a top view of a three point hitch and trailer coupling according to one embodiment of the invention;
Fig. 6 is a top view of a top link according to one embodiment of the invention; and
Fig. 7 is a top view of an alternate embodiment of the inventive top link.

Corresponding reference characters indicate corresponding parts throughout the several views. The exemplification set out herein illustrates one embodiment of the invention and such exemplification is not to be construed as limiting the scope of the invention in any manner.

### DETAILED DESCRIPTION OF THE INVENTION

The terms "agricultural tractor" and "agricultural implement" are used principally throughout this specification for convenience but it is to be understood that these terms are not intended to be limiting. Thus "agricultural tractor" refers to any towing vehicle equipped with a three point hitch, and "agricultural implement" refers to any towed device. Also the terms "forward", "rearward", "left" and "right", when used in connection with the agricultural tractor and/or components thereof are usually determined with reference to the direction of forward operative travel of the agricultural tractor, but again, they should not be construed as limiting. The terms "longitudinal" and "transverse" are determined with reference to the fore-and-aft direction of the agricultural tractor and are equally not to be construed as limiting.

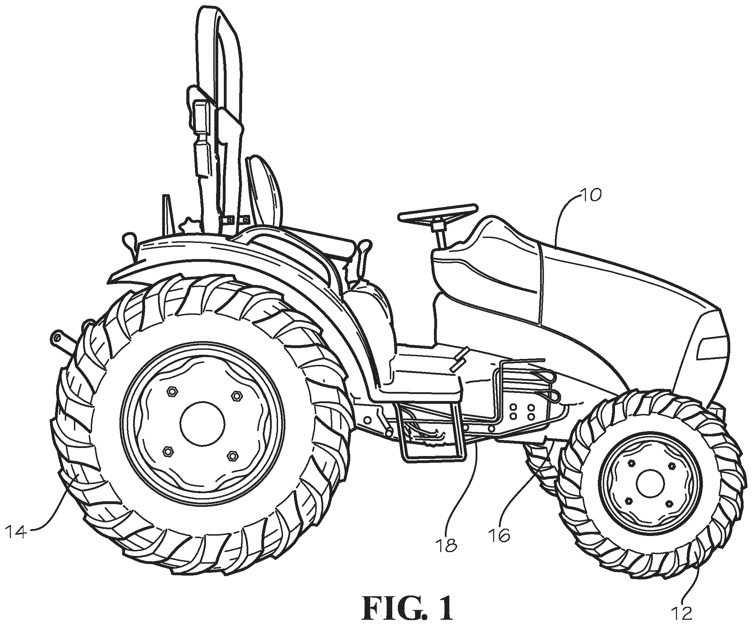

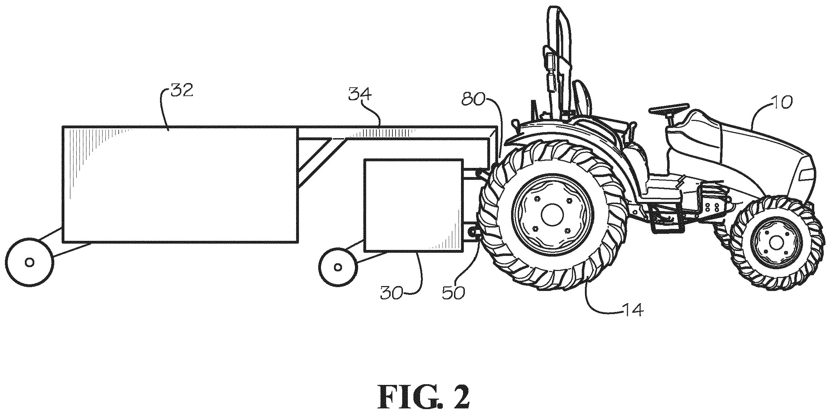

Referring now to the drawings, and more particularly to Fig. 1, there is shown an agricultural tractor 10 of ordinary design, having front wheels 12, rear wheels 14, an engine 16, and a chassis 18. The agricultural tractor 10 provides tractive effort through the rear wheels 14 and possible through the front wheels 12 using power supplied by the engine. Fig. 2 shows the agricultural tractor 10 of Fig. 1, now with a first agricultural implement 30 connected to the agricultural tractor's three point hitch 50, which is largely obscured by the rear wheels 14 of the agricultural tractor 10. A second agricultural implement 32 has a gooseneck 34 which allows it to reach up and over the first agricultural implement 30 to connect to the agricultural tractor's trailer coupling 80, which is also largely obscured by the rear wheels 14 of the agricultural tractor 10.

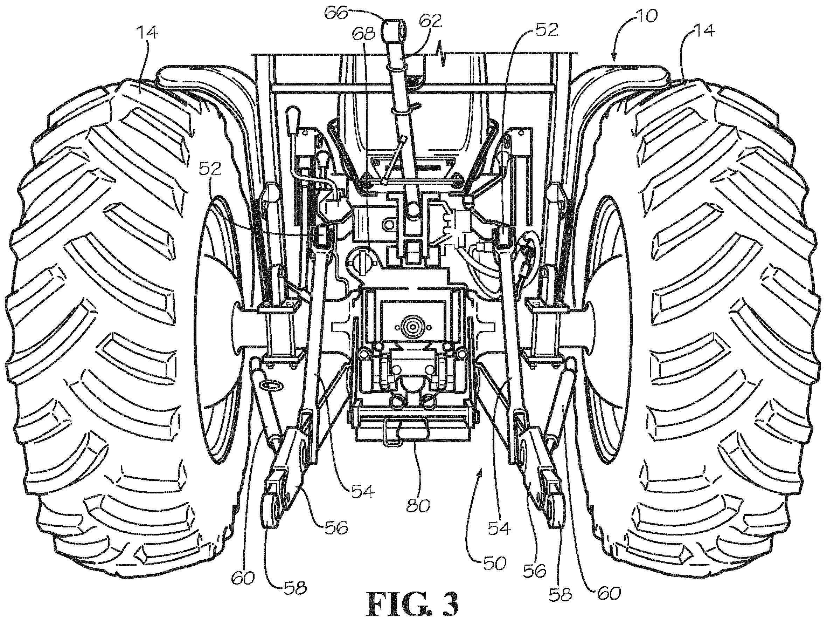

Referring now to Fig. 3, a rear view of the agricultural tractor 10 shows in greater detail a three point hitch 50 and trailer coupling 80 of ordinary design, being located generally between the rear wheels 14 of the agricultural tractor 10. The three point hitch 50 is provided with lift arms 56 and a top link 62. The lift arms 56 are raised and lowered by side links 54, one or both of which may be provided with a turnbuckle so that the side links 54 function to level an agricultural implement connected to the three point hitch 50. The side links 54 are connected to hydraulic arms 52 which are connected to a hydraulic system 68. In this way, the hydraulic system 68 causes the hydraulic arms 52 to rotate up and down, thereby raising and lowering the lift arms 56 through the side links 54. Stabilizer arms 60, or alternately check chains, prevent the lift arms 56 from swaying excessively from side to side, thereby stabilizing any agricultural implement attached thereto. Each of the lift arms 56 are provided with swivel ends 58, and the top link is provided with a swivel end 66, used to attach to an agricultural implement. The top link 62 itself is not usually powered to raise and lower, and merely acts as a parallel locating link. It is usually adjustable in length, so that the agricultural implement may be tilted forward or backward by extending it or retracting it, respectively.

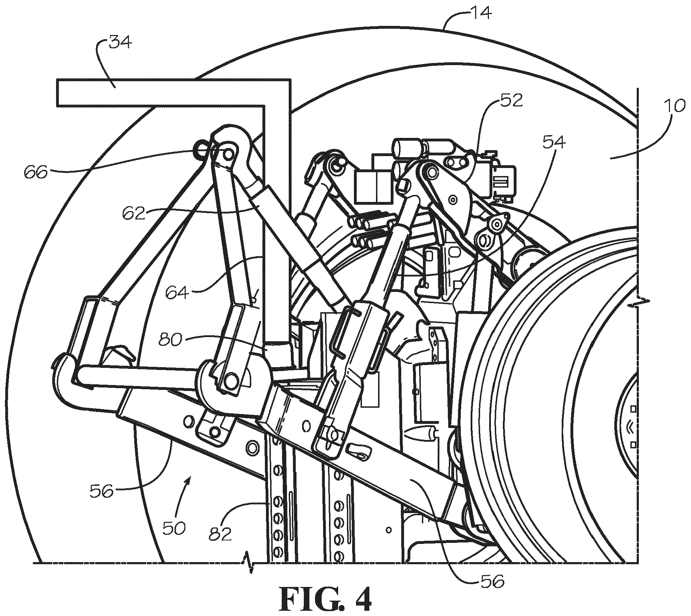

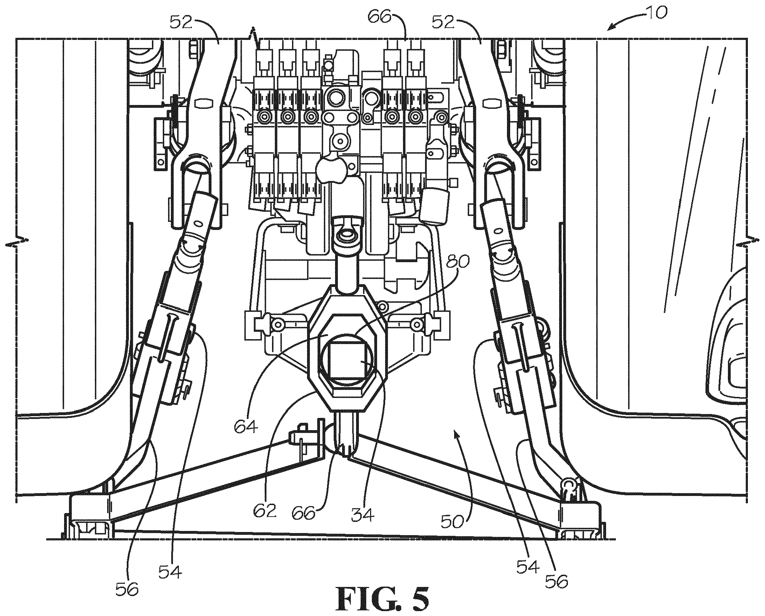

Referring now to Figs. 4 and 5, an embodiment of the present invention is shown, an agricultural tractor 10 having a three point hitch 50 and a trailer coupling 80 arranged to enable a first agricultural implement to be attached to the three point hitch 50 and a second agricultural implement having a gooseneck 34 to be attached to the trailer coupling 80, without raising the trailer coupling 80 to a point above the top link 62 of the three point hitch 50. Specifically, in addition to the hydraulic arms 52, the side links 54, and the lift arms 56 located generally between the rear wheels 14 of the agricultural tractor 10, the three point hitch 50 is further provided with a top link 62 having an opening 64 therein. This opening 64 is located along the length of the top link 62 and is formed from the bifurcation of the link into two separate arms that are joined at both ends. The opening 64 is of sufficient breadth and length that it accommodates the relative motion of the top link 62 and of the gooseneck 34 as the three point hitch 50 articulates and as the gooseneck 34 moves.

The top link 62 and its opening 64 may be of unitary construction, for example as a casting or forging, or it may be constructed, for example from joined or welded subcomponents. As a further example, the top link 62 and its opening 64 may double as a turnbuckle, so that when not being used to allow the gooseneck 34 of a second agricultural implement to pass therethrough, the top link 62 may be rotated to retract or extend its length, providing tilting adjustment to a first agricultural implement attached to the three point hitch 50. Note that the gooseneck 34 shown in Fig. 4 is shown in partial view, so that only the front most part is shown.

The trailer coupling 80 is therefore mounted beneath the top link 62 having the top link opening 64. In the embodiment shown, a trailer coupling vertical adjustment assembly 82 is shown raising the trailer coupling 80 to a closer proximity to the top link 62, of course without raising the trailer coupling 80 to above the top link 62. Depending upon the design and amount of relative articulation of the two agricultural implements attached to the three point hitch 50 and to the trailer coupling 80, and upon the size of the top link opening 64, no such trailer coupling vertical adjustment assembly 82 may be required. The trailer coupling 80 may be a ball-type of trailer coupling, or may be of any other suitable type.

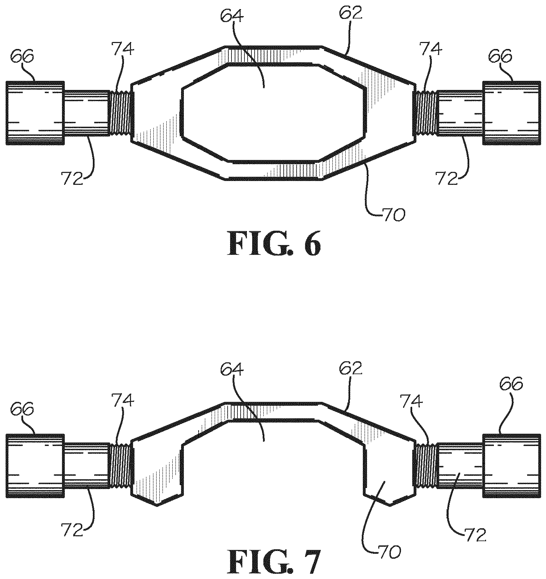

Referring now to Fig. 6, a detail view of the top link 62 is shown. Top link opening 64 is defined by a top link body 70, again being bifurcated along its length into two separate arms that are joined at both ends. In this embodiment, the top link 62 is adjustable in length, so that two top link tube ends 72 having top link swivel ends 66 are provided. Threaded joints 74 connect the top link tube ends 72 to the top link body 70, which may be of opposing thread pitches, so that turning the top link body 70 causes the top link 62 to extend and retract like a turnbuckle. Alternate unitary methods may be used to create the top link 62, so that it may be a single piece casting or forging, or it may be constructed as a weldment or joining of separate castings, forgings, or otherwise formed subcomponents. The swivel ends 66 of the top link 62 may be free swiveling within their limits of travel, or alternately may be self-centering, so that the top link 62 remains largely level when in use, thereby minimizing contact between the top link 62 and the gooseneck 34 due to the top link 62 twisting along its axis.

Referring now to Fig. 7, an additional embodiment of the top link 62 is shown. The top link 62 again has a top link body 70, but rather than be bifurcated along its length into two separate arms that are joined at both ends, the top link body 70 has a single arm that forms a "C" arrangement around the area through which the goose neck 34 of the 2nd implement 32 will pass, which fulfills the same function as the top link opening 64 of Fig. 6, and which can be optimized in shape and offset. Again, top link 62 is adjustable in length, so that two top link tube ends 72 having top link swivel ends 66 are provided. Threaded joints 74 again connect the top link tube ends 72 to the top link body 70, which may be of opposing thread pitches, so that turning the top link body 70 causes the top link 62 to extend and retract like a turnbuckle. Alternate unitary methods may again be used to create the top link 62, so that it may be a single piece casting or forging, or it may be constructed as a weldment or joining of separate castings, forgings, or otherwise formed subcomponents. The swivel ends 66 of the top link 62 may again be free swiveling within their limits of travel, or alternately may be self-centering, so that the top link 62 remains largely level when in use, thereby minimizing contact between the top link 62 and the gooseneck 34 due to the top link 62 twisting along its axis.

## Claims

1. An agricultural tractor (10) for attaching two agricultural implements (30, 32), comprising:
a chassis (12);
a three point hitch (50) for attaching a first agricultural implement (30); and
a trailer coupling (80) for attaching a second agricultural implement (32) having a gooseneck (34);
**characterized in that** the three point hitch (50) comprises:
two lift arms (56) for raising and lowering the first agricultural implement (30) attached to the three point hitch (50); and
a top link (62) having a top link opening (64) for accommodating the passage therethrough of the gooseneck (34) of the second agricultural implement (32), the gooseneck (34) of the second agricultural implement (32) being attachable to the trailer coupling (80).

2. The agricultural tractor (10) of claim 1, wherein:
the top link (62) is one of a casting, a forging, and a weldment.

3. The agricultural tractor (10) of claim 1, wherein:
the top link (62) is one of bifurcated along its length into two separate arms joined at their ends and formed with a single arm in a "C" arrangement.

4. The agricultural tractor (10) of claim 1, wherein:
the top link (62) is adjustable in length, having a top link body (70) with the top link opening (64), and having two top link tube ends (72), the top link body (70) and the top link tube ends (72) being connected using threads so configured that turning the top link body (70) extends or retracts the length of the top link (62).

5. The agricultural tractor (10) of claims 1 - 4, wherein:
the top link (62) further having swivel ends (66).

6. The agricultural tractor (10) of claim 5, wherein:
the swivel ends (66) of the top link (62) are self-centering, in order to minimize contact between the top link (62) and the gooseneck (34) of the second agricultural implement (32).

7. The agricultural tractor (10) of claims 1 - 6, wherein:
the trailer coupling (80) is a ball-type trailer coupling.

8. The agricultural tractor (10) of claims 1 - 7, further comprising:
a trailer coupling vertical adjustment assembly (82) located between the two lift arms (56) and beneath the top link (62).

9. A method of attaching two agricultural implements (30, 32) to an agricultural tractor (10), comprising the steps of:
providing an agricultural tractor (10) having a three point hitch (50) and a trailer coupling (80);
attaching a first agricultural implement (30) to the three point hitch (50); and
attaching a second agricultural implement (32) to the trailer coupling (80), the second agricultural implement (32) having a gooseneck (34) for reaching over the first agricultural implement (30) to the trailer coupling (80);
**characterized in that** the method further comprises the steps of:
providing the three point hitch (50) with two lift arms (56) for raising and lowering the first agricultural implement (30) attached to the three point hitch (50); and
providing the three point hitch (50) with a top link (62) having a top link opening (64) for accommodating the passage therethrough of the gooseneck (34) of the second agricultural implement (32).

10. The method of claim 9, wherein:
the top link (62) is one of a casting, a forging, and a weldment.

11. The method of claim 9, wherein:
the top link (62) is adjustable in length, having a top link body (70) with the top link opening (64), and having two top link tube ends (72), the top link body (70) and the top link tube ends (72) being connected using threads so configured that turning the top link body (70) extends or retracts the length of the top link (62).

12. The method of claims 9 -11, wherein:
the top link (62) further having swivel ends (66).

13. The method of claim 12, wherein:
the swivel ends (66) of the top link (62) are self-centering, in order to minimize contact between the top link (62) and the gooseneck (34) of the second agricultural implement (32).

14. The method of claims 9 -13, wherein:
the trailer coupling (80) is a ball-type trailer coupling.

15. The method of claims 9 - 14, further comprising:
providing a trailer coupling vertical adjustment assembly (82) located between the two lift arms (56) and beneath the top link (62).

## Patentansprüche

1. Landwirtschaftliche Zugmaschine (10) zum Befestigen von zwei landwirtschaftlichen Maschinen (30, 32) mit:
einem Fahrgestell (12);
einer Dreipunkt-Anhängevorrichtung (50) zum Befestigen einer ersten landwirtschaftlichen Maschine (30); und
einer Anhängerkupplung (80) zum Befestigen einer zweiten landwirtschaftlichen Maschine (32) mit einem Schwanenhalselement (34);
**dadurch gekennzeichnet, dass** die Dreipunkt-Anhängevorrichtung (50) aufweist:
zwei Lastarme (56) zum Anheben und Absenken der ersten landwirtschaftlichen Maschine (30), die an der Dreipunkt-Anhängevorrichtung (50) befestigt ist; und
eine obere Verbindung (62) mit einer oberen Verbindungsöffnung (64) zur Aufnahme des Schwanenhalselements (34) der zweiten landwirtschaftlichen Maschine (32) dadurch hindurch, wobei das Schwanenhalselement (34) der zweiten landwirtschaftlichen Maschine (32) an der Anhängerkupplung (80) befestigbar ist.

2. Landwirtschaftliche Zugmaschine (10) nach Anspruch 1, wobei:
die obere Verbindung (62) ein Gussteil, eine Schmiedeteil oder ein geschweißtes Teil ist.

3. Landwirtschaftliche Zugmaschine (10) nach Anspruch 1, wobei:
die obere Verbindung (62) entlang ihrer Länge in zwei separate Arme gegabelt, die sich an ihren Enden treffen, oder mit einem einzelnen Arm in einer "C"-Anordnung ausgebildet ist.

4. Landwirtschaftliche Zugmaschine (10) nach Anspruch 1, wobei:
die obere Verbindung (62) in der Länge einstellbar ist, wobei sie einen oberen Verbindungskörper (70) mit der oberen Verbindungsöffnung (64) aufweist, und zwei obere Verbindungsrohrenden (72) umfasst, wobei der obere Verbindungskörper (70) und die oberen Verbindungsrohrenden (72) mittels Gewindeeinrichtungen verbunden sind, die derart eingerichtet sind, dass ein Drehen des oberen Verbindungskörpers (70) die Länge der oberen Verbindung (62) auseinanderzieht oder zurückzieht.

5. Landwirtschaftliche Zugmaschine (10) nach den Ansprüchen 1 - 4, wobei:
die obere Verbindung (62) des Weiteren Drehgelenkenden (66) aufweist.

6. Landwirtschaftliche Zugmaschine (10) nach Anspruch 5, wobei:
die Drehgelenkenden (66) der oberen Verbindung (62) selbstzentrierend sind, um den Kontakt zwischen der oberen Verbindung (62) und dem Schwanenhalselement (34) der zweiten landwirtschaftlichen Maschine (32) zu minimieren.

7. Landwirtschaftliche Zugmaschine (10) nach den Ansprüchen 1 - 6, wobei:
die Anhängerkupplung (80) eine Kugelkopf-Anhängerkupplung ist.

8. Landwirtschaftliche Zugmaschine (10) nach den Ansprüchen 1 - 7, die des Weiteren aufweist:
eine Vertikaleinstellungsanordnung (82) der Anhängerkupplung, die zwischen den beiden Lastarmen (56) und unterhalb der oberen Verbindung (62) angeordnet ist.

9. Verfahren zum Befestigen von zwei landwirtschaftlichen Maschinen (30, 32) an einer landwirtschaftlichen Zugmaschine (10), das folgende Schritte aufweist:
Bereitstellen einer landwirtschaftlichen Zugmaschine (10) mit einer Dreipunkt-Anhängevorrichtung (50) und einer Anhängerkupplung (80);
Befestigen einer ersten landwirtschaftlichen Maschine (30) an der Dreipunkt-Anhängevorrichtung (50); und
Befestigen einer zweiten landwirtschaftlichen Maschine (32) an der Anhängerkupplung (80), wobei die zweite landwirtschaftliche Maschine (32) ein Schwanenhalselement (34) aufweist zum Überbrücken der ersten landwirtschaftlichen Maschine (30) hin zur Anhängerkupplung (80);
**dadurch gekennzeichnet, dass** das Verfahren des Weiteren folgende Schritte aufweist:
Vorsehen von zwei Lastarmen (56) an der Dreipunkt-Anhängevorrichtung (50) zum Anheben und Absenken der ersten landwirtschaftlichen Maschine (30), die an der Dreipunkt-Anhängerkupplung (50) befestigt ist; und
Vorsehen einer oberen Verbindung (62) an der Dreipunkt- Anhängevorrichtung (50), wobei die obere Verbindung (62) eine obere Verbindungsöffnung (64) zur Aufnahme des Schwanenhalselements (34) der zweiten landwirtschaftlichen Maschine (32) dadurch hindurch aufweist.

10. Verfahren nach Anspruch 9, wobei:
die obere Verbindung (62) ein Gussteil, ein Schmiedeteil oder ein geschweißtes Teil ist.

11. Verfahren nach Anspruch 9, wobei:
die obere Verbindung (62) in der Länge einstellbar ist, wobei sie einen oberen Verbindungskörper (70) mit der oberen Verbindungsöffnung (64) aufweist, und zwei obere Verbindungsrohrenden (72) umfasst, wobei der obere Verbindungskörper (70) und die oberen Verbindungsrohrenden (72) mittels Gewindeeinrichtungen verbunden sind, die derart eingerichtet sind, dass ein Drehen des oberen Verbindungskörpers (70) die Länge der oberen Verbindung (62) auseinanderzieht oder zurückzieht.

12. Verfahren nach den Ansprüche 9 - 11, wobei:
die obere Verbindung (62) des Weiteren Drehgelenkenden (66) aufweist.

13. Verfahren nach Anspruch 12, wobei:
die Drehgelenkenden (66) der oberen Verbindung (62) selbstzentrierend sind, um den Kontakt zwischen der oberen Verbindung (62) und dem Schwanenhalselement (34) der zweiten landwirtschaftlichen Maschine (32) zu minimieren.

14. Verfahren nach den Ansprüchen 9 - 13, wobei:
die Anhängerkupplung (80) eine Kugelkopf-Anhängerkupplung ist.

15. Verfahren nach den Ansprüchen 9 - 14, das des Weiteren aufweist:
Vorsehen einer vertikalen Einstellungsanordnung (82) der Anhängerkupplung, die zwischen den beiden Lastarmen (56) und unterhalb der oberen Verbindung (62) angeordnet ist.

## Revendications

1. Tracteur agricole (10) pour la fixation de deux outils agricoles (30, 32), comprenant :
un châssis (12) ;
un attelage trois points (50) pour la fixation d'un premier outil agricole (30) ; et une attache-remorque (80) pour la fixation d'un second outil agricole (32) possédant un col de cygne (34) ;
**caractérisé en ce que** l'attelage trois points (50) comprend :
deux bras de levage (56) pour soulever et abaisser le premier outil agricole (30) fixé à l'attelage trois points (50) ; et
une articulation supérieure (62) possédant une ouverture d'articulation supérieure (64) pour permettre le passage du col de cygne (34) du second outil agricole (32), le col de cygne (34) du second outil agricole (32) étant fixable à l'attache-remorque (80).

2. Tracteur agricole (10) selon la revendication 1, dans lequel :
le bras de liaison supérieur (62) est soit coulée, soit forgée, soit soudée.

3. Tracteur agricole (10) selon la revendication 1, dans lequel :
le bras de liaison supérieur (62) est bifurqué sur sa longueur en deux bras distincts assemblés à leurs extrémités et formés avec un bras simple dans une disposition en « C ».

4. Tracteur agricole (10) selon la revendication 1, dans lequel :
le bras de liaison supérieur (62) est de longueur réglable possédant un corps de bras de liaison supérieur (70) avec l'ouverture d'articulation supérieure (64), et possédant deux extrémités du tube du bras de liaison supérieur (72), le corps de bras de liaison supérieur (70) et les extrémités du tube du bras de liaison supérieur (72) étant reliés en utilisant des filets configurés de manière telle que la rotation du corps de bras de liaison supérieur (70) prolonge ou rétracte la longueur du bras de liaison supérieur (62).

5. Tracteur agricole (10) selon les revendications 1 à 4, dans lequel :
le bras de liaison supérieur (62) possède en outre des extrémités pivotantes (66).

6. Tracteur agricole (10) selon la revendication 5, dans lequel :
les extrémités pivotantes (66) du bras de liaison supérieur (62) sont à auto-centrage de manière à minimiser le contact entre le bras de liaison supérieur (62) et le col de cygne (34) du second outil agricole (32).

7. Tracteur agricole (10) selon les revendications 1 à 6, dans lequel :
l'attache-remorque (80) est une attache-remorque du type à boule.

8. Tracteur agricole (10) selon les revendications 1 à 7, comprenant en outre :
un ensemble de réglage vertical d'attache-remorque (82) situé entre les deux bras de levage (56) et en dessous du bras de liaison supérieur (62).

9. Procédé de fixation de deux outils agricoles (30, 32) à un tracteur agricole (10) comprenant les étapes suivantes :
fourniture d'un tracteur agricole (10) possédant un attelage trois points (50) et une attache-remorque (80) ;
fixation d'un premier outil agricole (30) à l'attelage trois points (50) ; et
fixation d'un second outil agricole (32) à l'attache-remorque (80), le second outil agricole (32) possédant un col de cygne (34) pour aller au-delà du premier outil agricole (30) jusqu'à l'attache-remorque (80) ;
**caractérisé en ce que** le procédé comprend en outre les étapes suivantes :
d otation de l'attelage trois points (50) avec deux bras de levage (56) pour soulever et abaisser le premier outil agricole (30) fixé à l'attelage trois points (50) ; et
d otation de l'attelage trois points (50) avec une articulation supérieure (62) possédant une ouverture d'articulation supérieure (64) pour faciliter le passage du col de cygne (34) du second outil agricole (32).

10. Procédé selon la revendication 9, selon lequel :
le bras de liaison supérieur (62) est soit coulée, soit forgée, soit soudée.

11. Procédé selon la revendication 9, selon lequel :
le bras de liaison supérieur (62) est de longueur réglable avec un corps de bras de liaison supérieur (70) avec l'ouverture d'articulation supérieure (64), et possédant deux extrémités du tube du bras de liaison supérieur (72), le corps de bras de liaison supérieur (70) et les extrémités du tube du bras de liaison supérieur (72) étant reliés en utilisant des filets configurés de manière telle que la rotation du corps de bras de liaison supérieur (70) prolonge ou rétracte la longueur du bras de liaison supérieur (62).

12. Procédé selon les revendications 9 à 11, selon lequel :
le bras de liaison supérieur (62) possède en outre des extrémités pivotantes (66).

13. Procédé selon la revendication 12, selon lequel :
les extrémités pivotantes (66) du bras de liaison supérieur (62) sont à auto-centrage de manière à minimiser le contact entre le bras de liaison supérieur (62) et le col de cygne (34) du second outil agricole (32).

14. Procédé selon les revendications 9 à 13, selon lequel :
l'attache-remorque (80) est une attache-remorque du type à boule.

15. Procédé selon les revendications 9 à 14, comprenant en outre :
la fourniture d'un ensemble de réglage vertical d'attache-remorque (82) situé entre les deux bras de levage (56) et en dessous du bras de liaison supérieur (62).
